# FASCICULE DE BREVET EUROPEEN

(11) **EP 2 179 113 B1**
(45) Date de publication et mention de la délivrance du brevet: **01.12.2010**
(21) Numéro de dépôt: 08827428.7
(22) Date de dépôt: 31.07.2008
(51) Int. Cl.: E04H 15/20, E04H 15/34

(54) **PAROI SOUPLE À DOUBLES PEAUX ET DISPOSITIF DE MAINTIEN SOUS TENSION D'UNE PAROI SOUPLE À DOUBLES PEAUX**
FLEXIBLE DOPPELSCHICHTIGE WAND UND VORRICHTUNG ZUR SPANNUNG EINER FLEXIBLEN DOPPELSCHICHTIGEN WAND
FLEXIBLE DUAL SKIN WALL AND DEVICE FOR TENSIONING A DUAL SKIN FLEXIBLE WALL

(30) Priorité: 01.08.2007 FR 0705623
(43) Date de publication de la demande: 28.04.2010
(73) Titulaire: Tissage et Enduction Serge Ferrari SA, 38110 Saint Jean de Soudain (FR)
(72) Inventeur: SAIZ, Carlos, F-73190 Challes Les Eaux (FR); BARIL, Sébastien, F-73000 Bassens (FR)
(74) Mandataire: Palix, Stéphane
(86) Numéro de dépôt international: PCT/FR2008/051446
(87) Numéro de publication internationale: WO 2009/022075

(56) Documents cités:
- EP-A- 1 439 272
- WO-A-03/054329
- DE-A1- 3 320 212
- DE-U1- 9 017 542
- US-A- 3 664 069

## Description

### DOMAINE TECHNIQUE

L'invention se rapporte au domaine des abris érigés à partir de montants rigides généralement métalliques et de parois à doubles peaux textiles s'étendant entre deux montants rigides parallèles. Ces parois à doubles peaux destinées à constituer des abris peuvent notamment se présenter sous la forme de couvertures faisant office de toiture, de murs, de cloisons intérieures, ou de plafonds.

L'invention concerne plus particulièrement le dispositif de maintien sous tension d'une telle paroi souple à doubles peaux avec la structure métallique formée par les différents montants rigides. L'invention concerne également la paroi souple équipée d'un tel dispositif de maintien sous tension.

### ART ANTERIEUR

De façon générale, il est connu d'utiliser de l'air comprimé pour gonfler l'interstice compris entre les deux peaux d'une paroi souple de ce type de manière à mettre sous tension les deux peaux textiles et ainsi supprimer les plis présents à sa surface et générer un rendu d'aspect général lisse à l'extérieur. Un tel dispositif a notamment été décrit dans le document EP-0 306 717 dans lequel une paroi souple à doubles peaux est équipée d'un jonc destiné à être inséré dans une gorge du montant rigide.

Cependant, dans ce cas, une fois la paroi gonflée la section de la paroi présente une forme de lentille, chaque peau de la paroi souple présentant une forme bombée vers l'extérieur de la paroi. Lorsque ces parois sont utilisées comme toitures de tente et soumises à une pluie battante, cette forme de paroi peut alors générer, à chaque jonction entre deux parois souples, une importante zone de retenue d'eau pluviale. De telles zones de retenue d'eau sont notamment gênantes car elles génèrent des traces de ruissellement, elles permettent la formation d'algues vertes et sont à l'origine d'importantes fuites qui peuvent apparaîtrent dans les domaines des toitures de tentes industrielles.

Par ailleurs, de telles parois nécessitent une importante énergie en air comprimé puisque le volume d'air gonflé est très important pour mettre sous tension les textiles constituant les peaux.

Par ailleurs, l'endommagement de l'une des peaux de la paroi souple génère automatiquement le dégonflage et la ruine de la paroi souple. Il est de plus impossible d'utiliser des peaux réalisées dans du textile ajouré notamment, puisque chacune des peaux se doit d'être imperméable à l'air.

De plus, ces parois doubles peaux lenticulaires présentent une capacité d'isolation thermique très médiocre en été comme en hiver due au fait que l'épaisseur de la lentille ainsi formée entre les deux peaux mises en pression est de l'ordre de 1 mètre, épaisseur pour laquelle les courants de convection de l'air intérieur sont énormes et responsables des échanges thermiques importants et donc de la perte de l'isolation.

Il a également été conçu des dispositifs tels que décrits dans le document DE 33 20 212 dans lesquels un jonc est agencé dans un fourreau gonflable puis inséré dans une gorge ménagée dans un montant rigide.

Cependant, ce type de dispositif ne permet plus, une fois le fourreau gonflé, de déplacer en translation la paroi à double peaux par rapport au montant rigide. En effet, le fourreau se déforme et exerce alors un effort de pression dans la gorge du montant et immobilise -de part les frottements ainsi générés- le fourreau par rapport au montant rigide. Un tel fourreau gonflé ne présente donc pas une forme cylindrique.

De même le document DE 90 17 542 décrit un dispositif dans lequel une barrette est introduite dans une gorge pour immobiliser les lisières d'une paroi à double peaux. Un tel dispositif ne comporte par de jonc solidaire des lisières des deux peaux et il ne permet de procéder au déplacement de la paroi une fois le boudin gonflé. Enfin, il n'est pas possible avec ce dispositif de réaliser une tension efficace de la paroi puisqu'en gonflant le boudin celui-ci peut engendrer le décrochement de la barrette de la gorge.

Ainsi, le but de l'invention est de réaliser une paroi souple à doubles peaux comportant un faible volume de gonflage destiné à mettre sous tension les deux peaux ainsi qu'une faible épaisseur de la lame d'air séparant les deux peaux.

Un autre objectif de l'invention est d'éviter la formation de zones de retenue d'eau, notamment au niveau de la toiture d'un abri réalisé au moyen d'une pluralité de parois souples juxtaposées parallèlement les unes par rapport aux autres.

De plus, un objectif est également de permettre l'emploi de peaux réalisées dans un textile ajouré soit pour réaliser des toitures ayant une protection solaire intégrée, soit des murs dont la paroi interne est ajourée pour permettre la captation et l'absorption des sons, soit enfin pour réaliser la fonte de la neige en toiture et en faciliter l'écoulement sous forme liquide sur une surface plane exempte de poches.

Enfin, un objectif est également de permettre le déplacement en translation de la paroi double peau par rapport au montant rigide lorsque le boudin est gonflé.

### EXPOSE DE L'INVENTION

L'invention concerne donc un dispositif de maintien sous tension d'une paroi souple à doubles peaux apte à coopérer avec au moins un montant rigide et étant agencé au niveau des lisières en regard des deux peaux destinées à être maintenues par le montant rigide. Un tel dispositif comprend :
- un jonc destiné à coopérer avec une gorge ménagée dans le montant rigide ;
- un boudin gonflable apte à écarter parallèlement l'une de l'autre les deux peaux ;

Selon l'invention, le dispositif de maintien se **caractérise en ce que**, une fois gonflé, le boudin gonflable présente une forme sensiblement cylindrique et reste confiné à l'extérieur du volume occupé par le montant rigide.

Autrement dit, un tel dispositif de maintien sous tension est agencé au niveau de chaque liaison de la paroi souple avec un montant rigide et permet à la fois de solidariser la paroi souple avec le montant rigide, mais également de mettre sous tension les deux peaux de manière plane et symétrique pour supprimer les plis à leur surface.

Le positionnement du boudin gonflable à proximité de la zone de solidarisation de la paroi avec le montant rigide, permet d'agencer parallèlement les deux peaux sur une grande surface entre les deux montants rigides. Seule une faible portion de chaque peau au niveau des lisières n'est pas plane, mais est agencée en regard du montant rigide et n'est donc pas perceptible.

De plus, le boudin gonflable n'exerce pas une force de pression dans la gorge du montant rigide. Ainsi, ce dispositif n'engendre pas de frottement sur le montant rigide et il est possible de déplacer en translation la paroi souple, même tendue, par rapport au montant rigide.

Un tel dispositif de maintien sous tension peut être réalisé de diverses manières, et notamment il peut être intégré entre les deux peaux et nécessiter leur présence pour être formé, il peut également être réalisé de manière indépendante puis rapporté entre les deux peaux par un procédé de solidarisation.

Ainsi, selon un premier mode de réalisation, le dispositif peut être formé par un ourlet interne reliant les deux peaux, les deux peaux étant formées par une unique nappe textile repliée sur elle-même en formant un tel ourlet interne au niveau d'une bordure de la paroi sur laquelle une ralingue intégrant le jonc est rapportée, l'ourlet interne recevant le boudin gonflable.

En d'autres termes, la paroi souple double peaux et le dispositif de maintien sont réalisés en repliant sur elle-même une nappe textile et en intégrant un boudin gonflable dans un ourlet interne refermé au moyen d'une ralingue intégrant le jonc. Seul l'ourlet interne est gonflé au moyen du boudin et seul le boudin nécessite d'être réalisé dans un matériau étanche au gaz.

Selon un second mode de réalisation, le dispositif peut être formé par une première bande repliée sur elle-même et formant une poche interne, la poche interne étant agencée au niveau d'une bordure de la paroi sur laquelle une ralingue intégrant le jonc est rapportée, la poche interne recevant le boudin gonflable.

Dans ce cas, les deux peaux peuvent être directement ou indirectement solidarisées avec la poche interne ou avec la ralingue. Par ailleurs, chacune des peaux peut être réalisée dans des matériaux différents, ce qui peut notamment être avantageux lorsque l'une des peaux est réalisée dans un matériau technique très coûteux. Il n'est donc pas nécessaire d'utiliser le matériau utilisé pour les peaux pour former d'une part la première bande, et d'autre part, des deux bandes d'accrochage rapportées sur la bande repliée sur elle-même.

De même, la ralingue peut quant à elle est soudée avec la bande repliée sur elle-même dans une portion plane ou courbe de la bande une fois gonflée par le boudin.

Avantageusement, le dispositif peut comporter un organe d'accouplement rapide agencé entre le jonc et la bordure de la paroi recevant le boudin gonflable.

En d'autres termes, l'organe d'accouplement rapide permet de fabriquer et de transporter de manière indépendante le jonc et la paroi à double peaux intégrant le boudin gonflable. La paroi peut alors être enroulée sur elle-même ce qui permet de réduire son encombrement et réduit les coûts de transport et de logistique associés.

Un tel organe d'accouplement peut notamment se présenter sous la forme d'une fermeture du type désigné couramment par la marque Eclair-Prestyl^{®}. Dans ce cas, les deux bandes destinées à coopérer et formant la fermeture sont thermo-soudées avec, d'une part, une portion de textile solidaire du jonc, et d'autre part, une autre portion de textile solidaire du boudin gonflable.

De plus, la portion de textile solidaire du jonc peut être remplacée si elle présente une usure importante ou bien si une nouvelle version plus performante en termes de coefficient de frottement ou de résistance à l'usure est développée par la suite et est adaptable au dispositif de l'invention.

Comme déjà évoqué, l'invention concerne également une paroi souple double peaux comportant un dispositif de maintien sous tension tel que précédemment décrit.

Autrement dit, une telle paroi souple comporte un dispositif permettant à la fois de maintenir les deux peaux sur des montants rigides, mais également de mettre sous tension ces deux peaux parallèlement l'une par rapport à l'autre.

En pratique, une telle paroi souple peut comporter un dispositif comprenant une bande repliée sur elle-même ou un fourreau cylindrique, les deux peaux étant thermo-soudées avec le dispositif.

En d'autres termes, une telle paroi souple peut être formée par deux peaux de nature différente et un dispositif de maintien sous tension comportant une bande repliée sur elle-même ou un fourreau dont la surface extérieure peut être solidarisée par thermo-soudage avec les deux peaux.

Avantageusement, une des deux peaux de la paroi souple peut être une nappe textile ajourée. Dans ce cas, il est possible de réaliser le renouvellement de l'air compris entre les deux peaux pour notamment éviter son échauffement. Une telle paroi souple peut également permettre de retenir de la neige sur le textile ajouré extérieur ce qui a comme conséquence immédiate de provoquer une excellente isolation thermique, la neige n'étant pas au contact de la peau textile intérieure.

Dans un second temps en faisant circuler un air chaud entre les deux peaux on provoque assez rapidement la fonte de la couche interne de la neige. Cet air chaud peut être pulsé par un dispositif ad hoc, ou plus simplement l'air chaud intérieur dont il faut assurer le renouvellement. Enfin lors de la fonte, l'écoulement de l'eau est réalisé sur la deuxième peau formée par une membrane étanche sur laquelle l'eau peut s'écouler.

Une troisième peau peut également être utilisée de manière à former deux volumes disjoints à l'intérieur de la paroi et dans lesquels des flux d'air peuvent circuler. Un tel agencement permettrait alors d'améliorer l'isolation d'un abri formé par de telles parois mais également de ventiler de réchauffer de l'air frais extérieur avec l'air chaud intérieur avant de le faire pénétrer dans l'abri.

Cette troisième peau peut notamment se présenter sous la forme d'un film pouvant s'étendre sans déformer les deux boudins gonflables équipant une paroi.

Par ailleurs de manière faciliter le glissement de la ralingue à l'intérieur du profilé tout en garantissant une bonne étanchéité de la jonction ralingue/profilé, des fils peuvent être agencés à la surface de la ralingue et orientés parallèlement par rapport au jonc.

### DESCRIPTION SOMMAIRE DES FIGURES

La manière de réaliser l'invention ainsi que les avantages qui en découlent ressortiront bien de la description et du mode de réalisation qui suit, donné à titre indicatif et non limitatif, à l'appui des figures dans lesquelles :
- les figures 1 et 2 sont des vues en perspective de deux 'exemples d'abris pouvant être réalisés au moyen de parois souples conformes à l'invention ;
- les figures 3, 4 et 5 représentent des vues en coupe de trois variantes d'un dispositif de maintien sous tension conforme à l'invention ;
- la figure 6 représente une vue en coupe d'un dispositif présentant un organe d'accouplement rapide.

### MANIERE DE REALISER L'INVENTION

Comme déjà évoqué, l'invention concerne une paroi souple et son dispositif de maintien permettant d'assembler une telle paroi souple avec au moins un montant rigide.

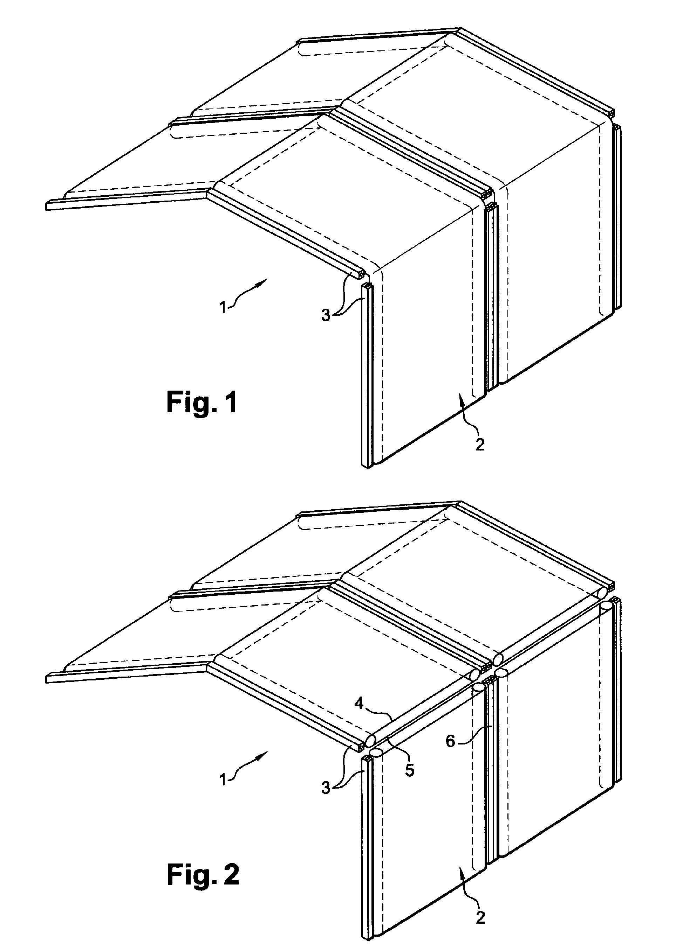

Tel que représenté à la figure 1, une juxtaposition de parois souples 2 peut permettre de réaliser un abri 1 et notamment de former à la fois une paroi verticale et une paroi inclinée de manière à former une cloison et une couverture d'un seul tenant. De cette manière, l'étanchéité au niveau de la jonction entre la couverture et les cloisons verticales peut être garantie.

Tel que représenté à la figure 2, un assemblage de deux parois souples permet de réaliser d'une part les parois verticales et d'autre part les parois inclinées de la couverture. Dans ce cas un rabat, non représenté, permet de réaliser l'étanchéité à la jonction de ces deux peaux. Une telle paroi souple 2 se compose de deux peaux 4,5 maintenues parallèlement entre deux montants rigides 3,6.

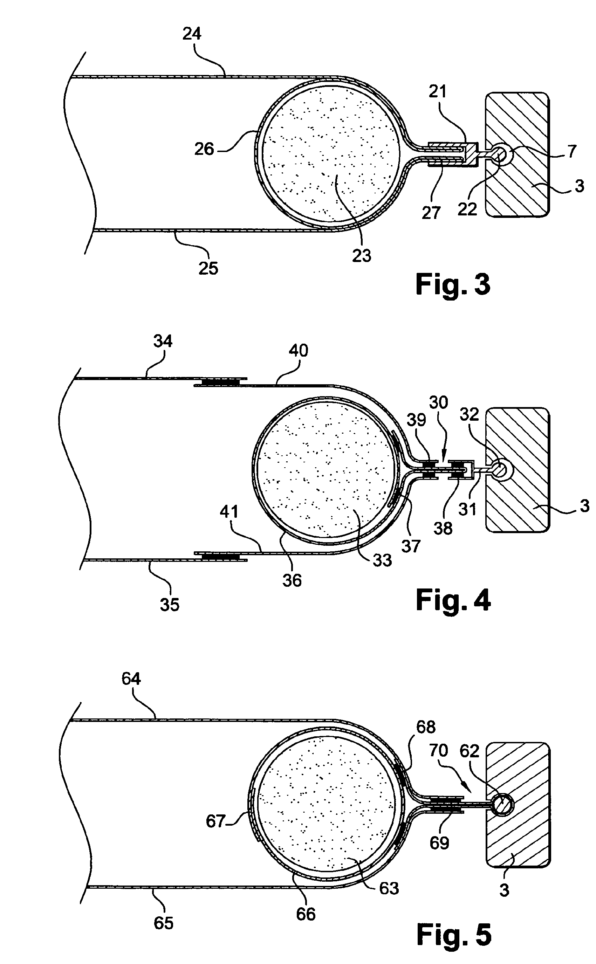

Tel que représenté à la figure 3, et selon une première variante, un tel dispositif de maintien comporte un boudin gonflable cylindrique 23 agencé à l'intérieur d'un ourlet interne 26 reliant les deux peaux 24,25 formées par une nappe textile repliée sur elle-même. Par ailleurs, le dispositif de maintien comporte également une ralingue 21 rapportée au niveau de la zone de pliage 27 de la nappe textile. Cette ralingue 21 intègre ainsi un jonc 22 qui peut être inséré dans une gorge 7 du montant 3.

Une valve non représentée équipe l'une des extrémités du boudin gonflable 23 et permet de procéder au gonflage du boudin qui est constitué d'une membrane étanche de forme cylindrique. La ralingue 21 peut être solidarisée de diverses manières avec la nappe textile et notamment par un procédé de thermo-soudage.

Tel que représenté à la figure 4, et selon une seconde variante de l'invention, la paroi souple à double peaux peut comporter une bande textile 36 repliée sur elle-même au niveau d'une zone de recouvrement 37 et formant une poche interne entre deux bandes d'accrochage 40,41. Les faces internes et externes de la bande 36 sont ainsi solidarisées par collage ou thermo-soudage au niveau de la zone de recouvrement 37.

Un tel agencement permet, lors du gonflage du boudin 33, de solliciter la zone de recouvrement 37 en cisaillement ce qui confère une importante résistance à l'arrachement de la bande 36 repliée sur elle-même. Les deux peaux 34, 35 sont alors rapportées sur les bandes d'accrochage 40, 41 et sont solidarisées par collage ou thermo-soudage.

La bande 36 permet de définir un volume limité d'expansion pour le boudin gonflable 33 et ainsi de mettre sous tension les deux peaux 34,35 tout en étant agencées parallèlement l'une par rapport à l'autre. Dans cette variante, une ralingue 31 est également agencée au niveau d'une zone extrémale 38 d'un pli 30 de la bande 36 repliée sur elle-même.

Par ailleurs, les bandes d'accrochage 40, 41 sont également solidarisées avec une seconde zone 39 du pli 30 de la bande 36. Cet agencement permet donc de limiter le nombre d'épaisseurs de nappes textile à quatre et permet au dispositif de conserver une souplesse relative. Il est en outre possible d'utiliser avec un tel dispositif des peaux 34, 35 de nature différente et notamment d'utiliser des peaux réalisées dans un matériau textile ajouré.

Tel que représenté à la figure 5, une troisième variante de l'invention peut être réalisée en repliant une bande 66 uniquement au niveau de ses lisières de manière à former une zone de recouvrement 67 éloignée de la zone d'accrochage de la ralingue 70. Dans ce cas, la ralingue 70 peut être directement rapportée par soudage sur la bande 66 dans une zone 68 agencée en regard du montant rigide 3. Une telle ralingue 70 est formée d'un jonc 62 entouré par une bande textile. Les deux peaux 64, 65 sont alors soudées sur une portion plane 69 de la ralingue 70.

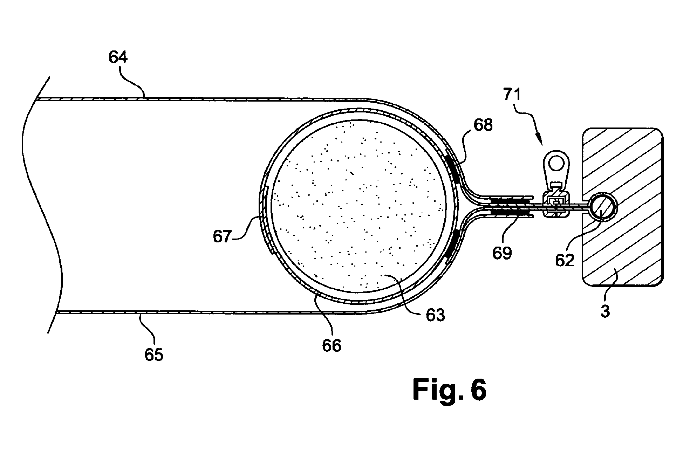

Tel que représenté à la figure 6, une telle ralingue peut également comporter un organe d'accouplement rapide 71 permettant, d'une part, une fabrication et un transport disjoints des deux éléments que sont le jonc et la paroi double peaux, et d'autre part, le remplacement du jonc indépendamment de la paroi. Dans la variante représentée cet organe se présente sous la forme d'une fermeture éclaire.

Il ressort de ce qui précède qu'un dispositif de maintien et une paroi souple conformes à l'invention présentent de nombreux avantages, notamment :
- ils permettent de réduire le volume à gonfler pour mettre sous tension de telles parois souples à doubles peaux ;
- ils permettent réduire les coûts de transport et de logistique d'une telle paroi ;
- ils permettent de procéder au remplacement uniquement du jonc ;
- ils permettent d'utiliser des peaux de nature différente de façon à adapter l'abri aux conditions environnementales auxquelles il est destiné ;
- ils permettent d'utiliser des matériaux perméables au gaz pour former au moins une des peaux ;
- ils permettent de limiter le nombre d'opérations de confection de telles parois souples ;
- ils peuvent permettre de constituer un abri particulièrement efficace et étanche, même en cas de chute de neige ou lors de la fonte de neige présente sur l'une des peaux.

## Revendications

1. Dispositif de maintien sous tension d'une paroi souple (2) à double peaux apte à coopérer avec au moins un montant rigide (3), ledit dispositif étant agencé au niveau des lisières en regard des deux peaux (24,25,34,35) destinées à être maintenue par le montant rigide (3), et comprenant :
- un jonc (22,32,62) destiné à coopérer avec une gorge ménagée dans le montant rigide ;
- un boudin gonflable (23,33,63) apte à écarter parallèlement l'une de l'autre les deux peaux (24,25,34,35) ;
ledit dispositif étant **caractérisé en ce que,** une fois gonflé, ledit boudin gonflable (23,33,63) présente une forme sensiblement cylindrique et reste confiné à l'extérieur du volume occupé par le montant rigide (3).

2. Dispositif selon la revendication 1, **caractérisé en ce qu'**il est formé par un ourlet interne (26) reliant les deux peaux (24,25), lesdites deux peaux (24,25) étant formées par une unique nappe textile repliée sur elle-même en formant ledit ourlet interne (26) au niveau d'une bordure de la paroi sur laquelle une ralingue (21) intégrant le jonc (22) est rapportée, ledit ourlet interne (26) recevant le boudin gonflable (23).

3. Dispositif selon la revendication 1, **caractérisé en ce qu'**il est formé par une première bande (36) repliée sur elle-même pour former une poche interne, ladite poche interne étant agencée au niveau d'une bordure de la paroi sur laquelle une ralingue (31) intégrant le jonc (32) est rapportée, ladite poche interne recevant le boudin gonflable (32).

4. Dispositif selon la revendication 1, **caractérisé en ce qu'**il comporte un organe d'accouplement rapide (71) agencé entre le jonc (62) et la bordure de la paroi recevant le boudin gonflable (63).

5. Paroi souple double peaux **caractérisée en ce qu'**elle comporte un dispositif de maintien sous tension selon la revendication 1.

6. Paroi souple double peau comportant un dispositif de maintien sous tension selon la revendication 3, **caractérisée en que** les deux peaux (34,35) sont thermo-soudées avec le dispositif.

7. Paroi souple double peau selon la revendication 5 **caractérisée en ce qu'**une des deux peaux (34,35) est une nappe textile ajourée.

## Claims

1. Device for tensioning a dual-skin flexible wall (2) capable of interaction with at least one rigid mount (3), the said device being mounted at the opposite edges of two skins (24,25,34,35) to be retained by the rigid mount (3) and comprising:
- a cord (22,32,62) designed to interact with a groove formed in the rigid mount;
- an inflatable bead (23,33,63) capable of spacing the two skins (24,25,34,35) away from and parallel to each other;
the said device being **characterised in that**, once inflated, the said inflatable bead (23,33,63) has a substantially cylindrical shape and remains confined outside the volume occupied by the rigid mount (3).

2. Device according to claim 1, **characterised in that** it is formed by an internal hem (26) connecting the two skins (24,25), the said two skins (24,25) being formed by a single sheet of fabric folded over itself and forming the said internal hem (26) at one edge of the wall on which a boltrope (21) incorporating the cord (22) is inserted, the said internal hem (26) receiving the inflatable bead (23).

3. Device according to claim 1, **characterised in that** it is formed by a first band (36) folded over itself and forming an internal pocket, the internal pocket being positioned at one of the edges of the wall on which a boltrope (31) incorporating the cord (32) is inserted, the internal pocket receiving the inflatable bead (32).

4. Device according to claim 1, **characterised in that** it comprises a quick-coupling device (71) positioned between the cord (62) and the edge of the wall receiving the inflatable bead (63).

5. Dual-skin flexible wall **characterised in that** it comprises a tensioning device according to claim 1.

6. Dual-skin flexible wall comprising a tensioning device according to claim 3, **characterised in that** the two skins (34,35) are thermowelded to the device.

7. Dual-skin flexible wall according to claim 5 **characterised in that** one of the two skins (34,35) is an open-weave textile sheet.

## Patentansprüche

1. Vorrichtung zum Gespannthalten einer flexiblen Wand (2) mit Doppelhaut, die mit mindestens einer starren Strebe (3) zusammenwirken kann, wobei die Vorrichtung im Bereich von Leisten, gegenüber den beiden Häuten (24, 25, 354, 35) angeordnet ist, die dazu bestimmt sind, von der starren Strebe gehalten zu werden, und Folgendes umfasst:
- eine Stange (22, 32, 62), die dazu bestimmt ist, mit einer Kehle zusammenzuwirken, die in der starren Strebe ausgebildet ist;
- einen aufblasbaren Schlauch (23, 33, 63), der die beiden Häute (24, 25, 34, 35) parallel voneinander wegspreizen kann;
wobei die Vorrichtung **dadurch gekennzeichnet ist, dass**, wenn der aufblasbare Schlauch (23, 33, 63) aufgeblasen ist, er eine im Wesentlichen zylindrische Form aufweist und außen an dem durch die starre Strebe (3) eingenommenen Volumen angrenzend bleibt.

2. Vorrichtung nach Anspruch 1, **dadurch gekennzeichnet, dass** sie von einem innenliegenden Saum (26) gebildet ist, der die beiden Häute (24, 25) miteinander verbindet, wobei die beiden Häute (24, 25) von einer einzige Textilbahn gebildet sind, die um sich selbst umgefaltet ist, wodurch der innenliegende Saum (26) im Bereich eines Rands der Wand gebildet ist, an der ein die Stange (22) integrierender Kantenstreifen (21) angebracht ist, wobei der innenliegende Saum (26) den aufblasbaren Schlauch (23) aufnimmt.

3. Vorrichtung nach Anspruch 1, **dadurch gekennzeichnet, dass** sie von einem ersten Streifen (36) gebildet ist, der um sich selbst umgefaltet ist, um einen innenliegende Tasche zu bilden, wobei die innenliegende Tasche im Bereich eines Rands der Wand gebildet ist, an der ein die Stange (32) integrierender Kantenstreifen (31) angebracht ist, wobei die innenliegende Tasche den aufblasbaren Schlauch (32) aufnimmt.

4. Vorrichtung nach Anspruch 1, **dadurch gekennzeichnet, dass** sie ein Schnellkupplungsteil (71) umfasst, das zwischen der Stange (62) und dem Rand der Wand angeordnet ist, der den aufblasbaren Schlauch (63) aufnimmt.

5. Flexible Doppelhautwand, **dadurch gekennzeichnet, dass** sie eine Vorrichtung zum Gespannthalten nach Anspruch 1 umfasst.

6. Flexible Doppelhautwand mit einer Vorrichtung zum Gespannthalten nach Anspruch 3, **dadurch gekennzeichnet, dass** die beiden Häute (34, 35) mit der Vorrichtung warmverschweißt sind.

7. Flexible Doppelhautwand nach Anspruch 5, **dadurch gekennzeichnet, dass** eine der beiden Häute (34, 35) eine durchbrochene Textilbahn ist.
